(19) **Europäisches Patentamt / European Patent Office / Office européen des brevets**

(11) **EP 2 307 590 B1**

(12) # FASCICULE DE BREVET EUROPEEN

(45) Date de publication et mention de la délivrance du brevet:
**04.01.2012 Bulletin 2012/01**

(21) Numéro de dépôt: **09740389.3**

(22) Date de dépôt: **24.07.2009**

(51) Int Cl.:
*C23C 24/08* (2006.01)     *C23D 5/00* (2006.01)
*B32B 18/00* (2006.01)

(86) Numéro de dépôt international:
**PCT/FR2009/051504**

(87) Numéro de publication internationale:
**WO 2010/012944 (04.02.2010 Gazette 2010/05)**

(54) **ARTICLE COMPRENANT UN REVÊTEMENT CÉRAMIQUE ET PROCÉDÉ DE FABRICATION D'UN TEL ARTICLE METTANT EN OEUVRE UN LASER.**

GEGENSTAND MIT KERAMIKÜBERZUG UND VERFAHREN ZUR HERSTELLUNG EINES DERARTIGEN GEGENSTANDS UNTER VERWENDUNG EINES LASERS

ARTICLE WITH A CERAMIC COATING AND METHOD FOR PRODUCING SUCH AN ARTICLE USING A LASER

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **29.07.2008 FR 0855221**

(43) Date de publication de la demande:
**13.04.2011 Bulletin 2011/15**

(73) Titulaire: **Seb S.A.**
**69130 Ecully (FR)**

(72) Inventeurs:
• **PARENT, Fabrice**
**F-73420 Mery (FR)**

• **VOISIN, Laurent**
**F-74150 Sales (FR)**
• **PERILLON, Jean-Luc**
**F-26130 Saint Paul Trois Chateaux (FR)**
• **HORY, Arnaud**
**F-87068 Limoges (FR)**
• **JOLY, Quentin**
**F-87068 Limoges (FR)**

(74) Mandataire: **Novagraaf Technologies**
**122 rue Edouard Vaillant**
**92593 Levallois-Perret Cedex (FR)**

(56) Documents cités:
| | |
|---|---|
| WO-A-00/56537 | WO-A-99/16625 |
| FR-A1- 2 575 422 | FR-A1- 2 622 600 |
| US-A1- 2003 059 600 | US-B1- 6 238 847 |

EP 2 307 590 B1

## Description

La présente invention concerne de manière générale un article comprenant un support métallique comprenant deux faces principales et au moins un revêtement céramique recouvrant l'une au moins de ces faces, ainsi qu'un procédé de fabrication d'un tel article dans lequel le revêtement céramique est fritté par un rayonnement laser.

De manière classique, de tels revêtements sont appliqués sous forme de suspension ou de barbotine aqueuse contenant une poudre réfractaire, puis sont frittés par un traitement thermique (par exemple par cuisson dans un four) au cours duquel les grains de la poudre réfractaire se soudent entre eux sous l'action de la chaleur, ce qui conduit à la consolidation du revêtement.

Dans le cas particulier d'un émail, le frittage est généralement obtenu par une cuisson au cours de laquelle se produit la fusion de la poudre d'émail, suivie d'un refroidissement au cours duquel la vitrification de l'émail s'opère. Avec un tel procédé de frittage (c'est-à-dire, un procédé mettant en oeuvre une cuisson dans un four), la fritte d'émail doit être appliquée sur un support qui est capable de supporter la température de fusion de l'émail (ou plus exactement de sa température de ramollissement).

Or, le frittage réalisé par une voie thermique de type cuisson dans un four ne permet pas de réaliser un revêtement céramique, notamment du type émail, sur un support dont le matériau constitutif présente une température de fusion inférieure à celle du point de ramollissement du revêtement céramique, car cela conduirait nécessairement à la fusion du support.

En outre, le frittage lorsqu'il est réalisé dans un four présente l'inconvénient d'une consommation d'énergie très élevée.

Pour remédier à ces inconvénients, il est connu de l'homme du métier d'utiliser un laser pour réaliser le frittage d'un revêtement céramique de type vitreux, tel qu'une glaçure ou un émail.

Ainsi par exemple, le brevet américain US·3,663,793 décrit un procédé pour former un indice ou un motif à la surface d'un article tel qu'une enveloppe de lampe en verre sodo-calcique. Ce procédé comprend une étape d'enduction d'au moins une partie de la surface de l'enveloppe d'une fritte vitreuse pigmentée contenant notamment de l'oxyde de plomb et se présentant sous forme d'une barbotine ou d'une suspension aqueuse, puis une étape de séchage à l'air pour former un couche pulvérulente. Puis, l'enveloppe ainsi revêtue est alors simultanément soumise à l'action de la flamme d'un brûleur et à celle d'un faisceau laser. L'action de la flamme du brûleur permet une cuisson de la couche pulvérulente à une température de l'ordre de 700°C, pendant laquelle elle se transforme en un revêtement du type émail blanc ou glaçure.

Etant donné que la température de la flamme est très proche du point de ramollissement du revêtement (695°C) et au-dessus de la température inférieure de recuit (« strain point ») de 470°C du verre sodocalcique constitutif de l'enveloppe, l'émail blanc (ou glaçure) ainsi formé constitue un revêtement durable et tenace qui ne fracture pas lorsqu'il est soumis au rayonnement laser. Si la flamme du brûleur est ajustée pour être réductrice, l'oxyde de plomb de la glaçure se transforme en plomb sous l'action du faisceau laser.

Dans le procédé du brevet américain US 3,663,793, le frittage de la couche pulvérulente en émail blanc ou glaçure est réalisé par l'action de la flamme d'un brûleur, le faisceau laser ayant essentiellement pour rôle de réduire l'oxyde de plomb en plomb de manière à former l'indice (ou le motif) à la surface de la glaçure.

Par ailleurs, on connaît de la demande de brevet japonais JP 2279574 un procédé pour décorer la surface d'une paroi qui peut être en brique, en ciment, en acier ou en aluminium. Ce procédé comprend une étape de projection à la flamme d'un matériau vitreux sur la surface d'une paroi pour y former une couche du revêtement vitreux, suivie d'une étape d'irradiation de certaines zones de la surface ainsi revêtue par un faisceau laser, pour former un film d'émail sur le revêtement vitreux.

Dans le procédé de JP 2279574, la couche d'émail sur le revêtement vitreux est en fait constituée par le revêtement préalablement vitrifié lors de la projection à la flamme, à la surface duquel l'action du laser se manifeste par la transformation de certains composés du revêtement, créant ainsi au niveau des zones irradiées une couche décorative de nature superficiellement différente du revêtement vitreux. De même que précédemment pour le procédé du brevet américain US 3,663,793, l'utilisation du laser dans le procédé de JP 2279574 ne sert pas à fritter la composition vitreuse, mais uniquement à créer le motif de décoration.

On connaît de la demande de brevet français FR 2575422, un procédé de décoration, de marquage et de gravure au laser d'objets ayant des surfaces émaillées. Ce procédé comprend une étape préalable de mélange à un émail de produits générateurs de trouble qui se dissocient localement et par action optique (par exemple des oxydes de titane, d'étain, de cérium ou d'antimoine), puis une étape d'action optique sur l'émail à l'aide d'un faisceau laser, par exemple un laser au $CO_2$ ou un laser de type YAG. D'après l'enseignement de la demande de brevet français FR 2575472, l'action optique par voie laser est réalisée soit sur une couche d'émail préalablement cuite par voie thermique et la décoration étant alors liée à la dissociation du ou des produit(s) générateur(s) de trouble sur les parties irradiées, soit sur une couche d'émail non cuite, mais qui recouvre une couche d'émail réalisée suivant les procédés habituels (c'est-à-dire généralement par cuisson dans un four). Cette demande de brevet français FR 2575422 n'enseigne donc pas un objet présentant des surfaces émaillées par voie laser.

La demande internationale WO 99/16625 décrit une méthode de marquage par activation thermique d'un support, notamment en acier inoxydable ou en aluminium. Cette méthode est basée sur l'irradiation par un laser d'une couche uniforme et continue d'un matériau de marquage adapté au substrat (notamment du type fritte de verre ou d'émail), ce matériau de marquage contenant un concentré absorbant l'énergie d'un rayonnement laser pour créer une liaison sur le substrat. Dans WO 99/16625, la fritte de verre ou d'émail ne se présente pas sous forme de barbotine aqueuse, mais huileuse, qui a donc tendance à l'étalement. Il n'est donc pas possible de former avant frittage un revêtement discontinu. En outre, le frittage d'une telle barbotine a tendance à produire de la suie, dont la présence à la surface du substrat pourrait gêner l'adhérence du revêtement à former. Enfin, la portion de matériau de marquage qui est irradiée par le rayonnement laser est également continue, ce qui a pour conséquence que le substrat ne peut subir de déformation après l'irradiation. En outre, étant donné que la fritte d'émail ou de verre est formulée sous forme d'une barbotine huileuse, cela a pour conséquence une carbonisation de l'huile lors du frittage. Or, cette carbonisation de l'huile consomme une part importante de l'énergie apportée par le laser, qui est supérieure à celle nécessaire à l'évaporation de l'eau. Le rendement énergétique du laser s'en trouve donc diminué.

Le but de la présente invention vise à pallier tout ou partie de ces inconvénients, par la formation d'un revêtement céramique ou métallique discontinu fritté par voie laser, se présentant sous forme d'une dispersion superficielle de gouttes solidifiées de matériau céramique ou métallique sur un substrat, avec une densité moindre ; voire quasi nulle au niveau des parties du substrat destinées à subir une déformation, notamment de type emboutissage. Le frittage par voie laser d'un tel revêtement permet d'une part de s'affranchir de la contrainte du support, qui peut donc être constitué d'un matériau à bas point de fusion alors que le revêtement pourra être un matériau à point de fusion ou de ramollissement élevé, et d'autre part de déposer un tel revêtement sans que cela n'engendre un apport excessif d'énergie.

Pour tendre vers cela, la présente invention propose un article comprenant un support métallique comprenant deux faces opposées, et un revêtement céramique ou métallique recouvrant l'une au moins des faces dudit support, ledit revêtement céramique ou métallique présentant un point de ramollissement qui est supérieur à la température de fusion du support, et comprenant au moins un élément absorbant le rayonnement laser à une longueur d'onde de l'ordre de 1 $\mu$m, représentant au moins 1% du poids dudit revêtement, caractérisé en ce que ledit revêtement céramique ou métallique est une couche discontinue présentant une rugosité de surface Ra comprise entre 2 $\mu$m et 10 $\mu$m et une épaisseur comprise entre 5 et 30 $\mu$m.

Par couche discontinue, on entend, au sens de la présente invention, une dispersion superficielle de gouttes solidifiée de matériau céramique ou métallique, ces gouttes présentant une taille moyenne entre 1 et 40 $\mu$m, et étant réparties de manière homogène à la surface de la face revêtue, avec un taux de recouvrement de cette surface comprise entre 30 et 80%.

Par dispersion superficielle de gouttes solidifiées de matériau céramique ou métallique, on entend, au sens de la présente invention, une couche de matériau céramique ou métallique se présentant à l'état divisé sur un support (en l'occurrence celui d'un article culinaire), de sorte que la rugosité de cette couche est créée par les gouttes solidifiées de matériau céramique ou métallique.

Par taux de recouvrement du support, on entend, au sens de la présente invention, le rapport, exprimé en pourcentages, de la surface du support effectivement couverte par la dispersion superficielle de gouttes solidifiées sur la surface totale du support pouvant être couverte.

Par matériau céramique, on entend, au sens de la présente invention, tout matériau inorganique, essentiellement non métallique.

Par essentiellement non métallique, on entend, au sens de la présente invention, que le matériau présente un réseau inorganique, dans lequel peuvent se trouver en très faible quantité des éléments métalliques tels que l'aluminium, le fer, le titane, le lithium, le sodium, le potassium, le calcium.

Sont considérés comme matériaux céramiques au sens de la présente invention :

- des matériaux inorganiques non métalliques de type non-oxydes tels que les nitrures, les borures, et les carbures (notamment le carbure de silicium),
- des matériaux inorganiques non métalliques de type oxydes, tels que les oxydes d'aluminium ($Al_2O_3$), de titane ($TiO_2$), de zirconium, de silicium,
- des matériaux inorganiques non métalliques composites, qui sont des composites des matériaux inorganiques précités de type oxydes et de type non-oxydes, et
- des matériaux naturels tels que le graphite, les aluminosilicates, les zirconates, ...

Les matériaux céramiques étant des matériaux réfractaires ayant des compositions et des structures hétérogènes, ils ne présentant donc pas de point de fusion uniforme. Pour de tels matériaux la réfractarité est généralement définie par le point de ramollissement.

Par point ou température de ramollissement d'un matériau réfractaire, on entend au sens de la présente invention, la température à laquelle le matériau se ramollit ou commence à ramollir et atteint une certaine consistance dans des conditions normalisées.

Par matériau métallique, on entend, au sens de la présente invention, tout métal ou alliage métallique apte à absorber le rayonnement laser à une longueur d'onde de l'ordre de 1 $\mu$m.

A titre de matériaux métalliques utilisables dans la présente invention pour constituer la couche discontinue, on peut notamment citer les aciers inoxydables (de grade alimentaire, et de préférence les aciers inoxydables 304 et 309), le titane et le nickel.

Pour que le frittage du revêtement céramique ou métallique de l'article selon l'invention puisse être réalisé par un rayonnement laser, il est nécessaire que le revêtement comprenne un élément absorbant le rayonnement émis par le laser travaillant à une longueur d'onde donnée.

Par élément absorbant, on entend de manière générale une substance employée pour absorber l'énergie d'un type donné de rayonnement.

Par élément absorbant le rayonnement laser à une longueur d'onde donnée, on entend, au sens de la présente invention, une substance employée pour absorber l'énergie d'un rayonnement laser émis par un laser émettant à cette longueur d'onde.

Dans le cadre de la présente invention, on utilise avantageusement un laser travaillant à une longueur d'onde de l'ordre de 1 $\mu$m, comme par exemple un laser ligne émettant une longueur d'onde de 980 nm, ou un laser fibré et émettant à une longueur d'onde de 1064 nm.

A titre d'éléments qui absorbent le rayonnement laser à une longueur d'onde de l'ordre de 1 $\mu$m et sont susceptibles d'être utilisés dans la couche de la présente invention on conseille un élément absorbant choisi parmi les aciers inoxydables (de préférence ceux qui sont autorisés dans le cadre d'un usage alimentaire) les oxydes métalliques, notamment parmi les oxydes d'alumi-nium ($Al_2O_3$), de titane ($TiO_2$), les oxydes de fer, les oxydes mixtes de cuivre, fer, et manganèse, le carbure de silicium, le carbure de tungstène et le graphite.

Ainsi, dans le cas d'un revêtement métallique au sens de la présente invention, celui-ci est par nature constitué d'un matériau absorbant le rayonnement laser à une longueur d'onde de l'ordre de 1 $\mu$m, et il n'est donc pas nécessaire d'ajouter un élément absorbant le rayonnement laser supplémentaire dans la suspension aqueuse de poudre métallique qu'on applique sur le support en vue de former le revêtement.

Il en est de même dans le cas d'un revêtement céramique constitué par exemple d'alumine ou de titane qui sont également des matériaux absorbant le rayonnement laser à une longueur d'onde de 1 $\mu$m.

Par contre, si le revêtement est réalisé en un matériau inorganique obtenu par fusion d'une fritte d'émail par exemple, il est nécessaire d'ajouter au moins 1% en poids par rapport au poids de la fritte d'au moins un élément absorbant le rayonnement laser à une longueur d'onde de l'ordre de 1 $\mu$m dans la suspension aqueuse de fritte d'émail (ou barbotine) que l'on applique sur le support. En effet, même si une fritte d'émail comporte, dans sa composition (qui est celle obtenue après un passage à l'état fondu) de l'alumine, elle n'absorbe plus le rayonnement laser. En effet, l'alumine entrant dans la composition de la fritte d'émail n'est plus sous la forme $Al_2O_3$ : elle est incluse dans un réseau inorganique, c'est à dire reliée à d'autres éléments différents des éléments aluminium (Al) et oxygène (O).

A titre d'éléments qui absorbent le rayonnement laser à une longueur d'onde de l'ordre de 1 $\mu$m, il est également possible d'utiliser dans le cadre de la présente invention des substances colorantes organiques (absorbeurs organiques, comme par exemple les colorants borates organiques développés par la société Exciton) ou des pigments minéraux tels que les oxydes de cobalt, de chrome, et en particulier les pigments minéraux des pigments à base de CoCrFeNi, ZrSiCoNi, CoAl.

Selon un mode de réalisation particulièrement avantageux de la présente invention, le revêtement céramique est un revêtement comprenant de l'émail, dont la composition est adaptée à la nature du support, notamment un « émail pour aluminium », un « émail pour verre », un « émail pour tôle en acier » (de préférence en acier inoxydable), ou en « émail pour céramique».

Par « émail pour aluminium », on entend, au sens de la présente invention, un émail à bas point de ramollissement (inférieur à 600°C).

Par « émail pour verre », on entend, au sens de la présente invention, un émail avec un point de ramollissement compris entre 600 et 650°C.

Par « émail pour tôle en acier (de préférence inoxydable), on entend, au sens de la présente invention, un émail avec un point de ramollissement proche de 800°C.

Par « émail pour céramique », on entend, au sens de la présente invention, un émail avec un point de ramollissement très élevé (notamment supérieur à 900°C).

Quelle que soit la nature de l'émail recouvrant le support, il doit être adapté au support en termes de coefficient thermique.

Bien entendu, les paramètres du laser (en particulier la longueur d'onde et la puissance) doivent être adaptés à la nature de l'émail utilisé. Par exemple, la puissance du faisceau laser, la vitesse de balayage du faisceau laser, le temps d'impulsion, la période de trame sont des paramètres à adapter en fonction de l'émail et de la quantité d'éléments absorbant le rayonnement présents dans la composition de l'émail : il faut moins d'énergie pour les émaux à bas point de fusion que les émaux à haut point de fusion.

A titre d'exemples de couples (puissance laser/ vitesse de balayage) permettant de réaliser le frittage, on conseille (4 à 5 KW, 10 à 15m/s), (200W, 2m/s) et (50 W, 400 à 500 mm/s).

Selon une première variante de ce mode de réalisation, le support est en aluminium ou en alliage d'aluminium. Pour une telle variante de réalisation, il est possible d'utiliser un « émail pour tôle en acier» dont la composition contient typiquement :

$SiO_2$ : > 55%,
$B_2O_3$ : 10% environ,
$Na_2O$ : 10% environ,

$Li_2O$ : < 5%,

Oxydes de baryum, cobalt, nickel, cuivre, titane, manganèse : < 3% pour chacun des composés,

les pourcentages indiqués étant des pourcentages massiques.

Le frittage par voie laser d'un tel revêtement comprenant de l'émail aboutit à un émail vitrifié contenant moins de 20% d'élément(s) fondant(s), alors que le frittage par une voie plus classique telle que la cuisson dans un four conduit à un taux de fondant(s) bien supérieur, de l'ordre de 35%.

Par élément fondant, on entend au sens de la présente invention, toute substance présente dans la composition de l'émail et qui, même en quantité minime, baisse la température de ramollissement du matériau céramique.

A titre d'élément fondant utilisable dans un revêtement d'émail selon l'invention, on conseille les alcalins et les alcalino-terreux ou plus particulièrement, l'oxyde de sodium, l'oxyde de potassium, l'oxyde de bore, l'oxyde de bismuth, et l'oxyde de vanadium.

A titre d'alliages d'aluminium susceptibles d'être utilisés pour réaliser le support de l'article selon l'invention, on conseille les alliages d'aluminium émaillables faiblement alliés et les alliages d'alliages d'aluminium de fonderie.

En particulier, à titre d'alliages d'aluminium émaillables faiblement alliés susceptibles, on conseille :

- les aluminiums « purs » à 99% d'aluminium de la série 1000, et par exemple les alliages 1050, 1100, 1200 et 1350,
- les alliages d'aluminium et de manganèse de la série 3000, et par exemple les alliages 3003, 3004, 3105 et 3005,
- les alliages d'aluminium et de silicium de la série 4000, et par exemple les alliages 4006 et 4007,
- les alliages d'aluminium et de magnésium de la série 5000, et par exemple les alliages 5005, 5050 et 5052, et 5754,
- les alliages d'aluminium, silicium et magnésium de la série 6000, et par exemple les alliages 6053, 6060, 6063, 6101 et 6951, et
- les alliages d'aluminium, fer, silicium de la série 8000, et par exemple l'alliage 8128.

A titre d'alliages d'aluminium de fonderie susceptibles d'être utilisés pour réaliser le support de l'article selon l'invention, il est possible d'utiliser tout type d'alliage d'aluminium silicium AS, et notamment des alliages d'aluminium-silicium qui sont usuellement produits dans le cadre d'un émaillage car ils présentent une température de fusion proche voire même inférieure au point de ramollissement des émaux. On conseille plus particulièrement les alliages aluminium-silicium AS, et de préférence les alliages aluminium-silicium de type AS7 à AS12, c'est-à-dire, les alliages AS contenant de 7 à 12% de silicium conformément à l'ancienne norme française NF AS 02-004.

Selon une deuxième variante de ce mode de réalisation de la présente invention dans lequel le revêtement céramique est un revêtement comprenant de l'émail, le support est en acier inoxydable. Pour un tel mode de réalisation, le revêtement en émail peut être un émail classique tel qu'un « émail pour tôle en acier, de préférence inoxydable, de composition pondérale :

$SiO_2$ : > 55%,
$B_2O_3$ : 10% environ,
$Na_2O$ : 10% environ,
$Li_2O$ : < 5%,
Oxydes de baryum, cobalt, nickel, cuivre, titane, manganèse : < 3% pour chacun des composés

Il est également possible d'utiliser ou un « émail inox », mais il est possible d'utiliser un émail pour céramique » de composition :

$SiO_2$ : > 65%
$B_2O_3$ : > 10%
$Na_2O$ : < 10%
$K_2O$ : < 10%
$ZrO_2$ : < 5%

les pourcentages indiqués étant des pourcentages massiques.

Dans le cadre de ce mode de réalisation avantageux de la présente invention où le revêtement céramique est un revêtement d'émail, l'article peut également comprendre, outre le revêtement d'email recouvrant l'une au moins des faces principales du support, un revêtement antiadhésif comportant au moins une couche comprenant au moins une résine fluorocarbonée, seule ou en mélange avec une résine d'accrochage thermostable résistant à au moins 200°C, cette résine d'accrochage formant après frittage un réseau continu fritté.

A titre de résine fluorocarbonée utilisable dans le revêtement antiadhésif selon l'invention, on conseille le poly-tétrafluoroéthylène (PTFE), le copolymère de tétra-fluoroéthylène et de perfluoropropylvinyléther (PFA), le copolymère de tétrafluoroéthylène et d'hexafluoropropylène (FEP), et leurs mélanges (en particulier un mélange de PTFE et de PFA).

A titre de résine d'accrochage utilisable dans le revêtement antiadhésif selon l'invention, on conseille les polyamides imides (PAI), les polyéthers imides (PEI), les polyimides (PI), les polyéthercétones (PEK), les polyétheréthercétones (PEEK), les polyéthersulfones (PES) et les sulfures de polyphénylène (PPS) et leurs combinaisons.

De manière préférée, le revêtement antiadhésif recouvrant la base dure en émail comprend une couche de primaire d'accrochage et au moins une couche de finition, l'une au moins des couches de finition définissant une couche de surface, la couche de primaire et la ou les couche(s) de finition comprenant chacune au moins une résine fluorocarbonée frittée, seule ou en mélange avec une résine d'accrochage thermostable et résistant à au moins 200°C, qui forme(nt) un réseau continu fritté de résine fluorocarbonée, et le cas échéant, de résine d'accrochage.

La couche de primaire peut également avantageusement comprendre des charges minérales ou organiques et/ou des pigments.

A titre de charges utilisables dans la composition de primaire de l'article selon l'invention, on peut notamment citer la silice colloïdale, les paillettes de mica recouverte de $TiO_2$, l'alumine, le corindon, le quartz et leurs mélanges.

Le revêtement antiadhésif en particulier au niveau du primaire peut comprendre un élément absorbant le rayonnement laser à une longueur d'onde de 10,6 $\mu$m.

A titre d'exemple d'élément absorbant le rayonnement laser à une longueur d'onde de 10,6 $\mu$m, on conseille les oxydes métalliques, en particulier les oxydes de fer.

Toutefois, comme le revêtement antiadhésif est réalisé sur le revêtement céramique comprenant de l'émail, le frittage d'un tel revêtement peut avantageusement être réalisé par voie laser même si ce revêtement ne comporte pas d'élément absorbant le rayonnement laser à une longueur d'onde de 10,6 $\mu$m.

Dans une telle configuration, le rayonnement laser traverse le revêtement antiadhésif et est absorbé par le revêtement céramique sous-jacent, qui le chauffe par conduction thermique.

En fait, dans une telle configuration, il est avantageux que le revêtement antiadhésif comprenne des charges permettant de faciliter la conduction thermique à l'intérieur du revêtement antiadhésif, et plus particulièrement à travers le primaire d'accrochage. D'une manière générale il est moins souhaitable d'introduire ces charges dans la couche superficielle car elles conduiraient à abaisser le caractère antiadhésif du revêtement.

On peut envisager différents types d'articles conformes à l'invention. Par exemple, dans le domaine culinaire, on peut envisager des disques plans destinés à être emboutis pour présenter la forme finale d'un article culinaire, ou des articles culinaires en tant que tels, destinés ou non à la cuisson d'aliments et dont une première des faces opposées est une face intérieure concave destinée à être disposée du côté d'aliments susceptibles d'être introduits dans l'article, et une seconde des faces opposées est une face extérieure convexe destinée à être disposée du côté d'une source de chaleur.

Par disque plan, on entend, au sens de la présente invention, une pièce pleine et ronde métallique, commercialement plate découpée dans une tôle ou une bande.

On peut également utiliser d'autres types de supports plans, dont le format est adapté à l'article culinaire que l'on souhaite réaliser (notamment de format elliptique, rectangulaire ou carré).

A titre d'exemples non limitatifs d'articles culinaires conformes à la présente invention, on citera notamment des articles culinaires tels que les casseroles et les poêles, les woks et les sauteuses, les crêpières, les grills, les moules et plaques pour la pâtisserie, les plaques et grilles de barbecue.

On peut également envisager d'autres types de supports qui ne sont pas limités au seul domaine culinaire. Ainsi, on peut également envisager à titre d'articles conformes à l'invention des articles électroménagers, ou encore des composants en matière plastique pour l'automobile ou le flaconnage.

La présente invention a également pour objet un article, comprenant les étapes successives suivantes :

- une étape de fourniture d'un support métallique comprenant deux faces opposées, puis
- une étape d'application d'une composition céramique ou métallique sur au moins l'une desdites faces dudit support pour former une couche non frittée, ladite composition céramique ou métallique comprenant une poudre céramique ou métallique et au moins un élément absorbant le rayonnement laser à une longueur d'onde de l'ordre de 1 $\mu$m, qui représente au moins 1% du poids de ladite poudre,

- une étape de frittage par un rayonnement laser à une longueur d'onde de l'ordre de 1 $\mu$m et irradiant au moins partiellement ladite couche discontinue,

ledit procédé étant caractérisé en ce que :

- la composition céramique ou métallique est une dispersion aqueuse, et
- l'une au moins des étapes d'application de la composition aqueuse et de frittage de la couche non frittée est réalisée de manière à former un revêtement céramique ou métallique discontinu.

De préférence, la poudre céramique ou métallique est présente dans la composition céramique ou métallique à raison de 45% à 75% en poids du poids total de ladite composition.

Un tel procédé présente l'avantage de limiter nettement la consommation d'énergie généralement nécessaire pour le frittage d'un revêtement céramique, notamment du type émail, en la réduisant d'un facteur 100 par rapport à un frittage par voie thermique.

En outre, avec un tel procédé, il est possible de réaliser le frittage du revêtement céramique sur un support qui ne possède pas nécessairement la forme finale de l'article, par exemple un support plan, tel qu'un disque, qui est destiné à être embouti pour lui conférer la forme finale de l'article : chaque goutte de matériau céramique ou métallique est unitaire avec une adhérence suffisamment forte sur le support pour qu'il puisse subir de légères déformations sans que la couche discontinue se décolle de celui-ci.

Selon un premier mode de réalisation du procédé de l'invention, l'étape de frittage de la composition céramique ou métallique est réalisée par un rayonnement laser irradiant par un balayage continu (sous forme de lignes avec une épaisseur et un intervalle entre les lignes définis) au moins une partie de la face revêtue de la composition céramique.

Selon un deuxième mode de réalisation du procédé de l'invention, l'étape de frittage de la composition céramique est réalisée par un rayonnement laser irradiant par un balayage discontinu (sous forme de spots de diamètre et d'intervalle définis) au moins une partie de la face revêtue de la composition céramique.

D'autres avantages et particularités de la présente invention résulteront de la description qui va suivre, donnée à titre d'exemple non limitatif et faite en référence aux figures annexées :

- la figure 1 représente une vue schématique en coupe d'un article culinaire conforme à l'invention selon une première variante de réalisation,
- la figure 2 représente une vue schématique en coupe d'un article culinaire conforme à l'invention selon une deuxième variante de réalisation, et
- la figure 3 représente une vue schématique en coupe d'un article culinaire conforme à l'invention selon une troisième variante de réalisation.

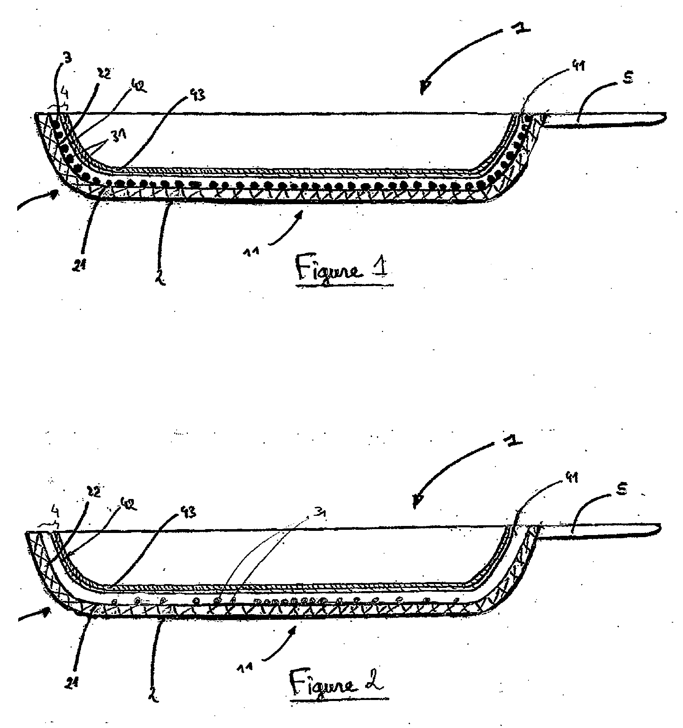

Les éléments identiques représentés sur les figures 1 à 3 sont identifiés par des références numériques identiques.

Sur les figures 1 à 3, on a représenté à titre d'exemple d'article culinaire selon l'invention, une poêle 1 comprenant un support métallique 2 se présentant sous forme de calotte creuse munie d'une poignée de préhension 5, la calotte comprenant un fond 1 et une paroi latérale s'élevant à partir du fond 1. Le support 2 comprend une face intérieure 21 qui est la face orientée du côté des aliments susceptibles d'être reçus dans la poêle 1, et une face extérieure 22 qui est destinée à être disposée vers une source de chaleur extérieure.

La face intérieure 21 est revêtue successivement, à partir du support 2, d'un revêtement 3 céramique ou métallique et d'un revêtement antiadhésif 4 qui comprend successivement à partir de la base dure 3 une couche de primaire 41 d'accrochage et deux couches de finition 42, 43. Le revêtement 3 constitue ainsi une base dure pour le revêtement antiadhésif 4 qui la recouvre.

Le revêtement céramique ou métallique 3 recouvrant la face intérieure 21 du support 2 est une couche discontinue, présentant une rugosité de surface Ra comprise entre 2 $\mu$m et 10 $\mu$m et une épaisseur comprise entre 5 et 30 $\mu$m, de préférence entre 5 $\mu$m et 15 $\mu$m. Cette couche discontinue 3 comprend en fait une dispersion superficielle de gouttes de matériau céramique ou métallique 31 qui sont solidifiées et présentent une taille moyenne entre 1 $\mu$m et 40 $\mu$m.

Sur une première variante d'article culinaire selon l'invention illustrée sur la figure 1, les gouttes solidifiées sont réparties de manière homogène sur toute la surface de la face intérieure 21, avec un taux de recouvrement de la face intérieure 21 compris entre 30 et 80%.

Sur une deuxième variante d'article culinaire selon l'invention représentée sur la figure 2, la dispersion superficielle de gouttes 31 solidifiées, recouvrant la face intérieure 21 du support 2 pour constituer le revêtement céramique 3, n'est pas uniforme. Dans cette première variante, la densité de gouttes d'émail est maximale au niveau de la partie centrale du fond 12 de la poêle 1, et diminue vers la paroi latérale 11.

Une troisième variante d'article culinaire selon l'invention présente également une dispersion superficielle de gouttes de matériau céramique ou métallique 31, qui sont solidifiées et recouvrent la face intérieure 21 du support 2. Cette dispersion n'est pas non plus uniforme. Dans cette variante, la densité de gouttes solidifiées 31 est nulle au niveau de la zone 13 de jonction entre le fond 11 et la paroi latérale 12 de la poêle (qui correspond à la partie de l'article subissant la mise en forme, notamment par emboutissage), et la densité de gouttes solidifiées 31 est maximale au niveau de la partie centrale du fond 12 et de la paroi latérale, qui sont des parties de la poêle ne subissant aucune déformation lors de la mise en forme, notamment par emboutissage.

Dans les variantes de réalisation représentées sur les figures 1 à 3, les gouttes de matériau céramique ou métallique 31, qui sont dispersées à la surface de la face intérieure 2, se trouvent noyées dans la couche de primaire 41 du revêtement antiadhésif 4, de manière à permettre l'accrochage de la couche de primaire, de sorte que l'on obtient un renforcement mécanique accru du revêtement antiadhésif 4, notamment en termes de dureté et d'adhérence à la base dure 3 sous-jacente. Les particules de résine fluorocarbonée frittée et les charges de la couche de primaire 41, en pénétrant entre les gouttes 31 solidifiées de matériau céramique ou métallique déposées à la surface de la face intérieure 21, renforcent l'adhérence de la couche de primaire 41 sur la base dure 3. De ce fait, le renforcement mécanique du revêtement antiadhésif 4 est accru à la fois grâce aux charges dans la couche de primaire 41 et grâce à la dispersion de gouttes solidifiées 31 de la base dure 3 qui jouent un rôle analogue à celui d'une charge renforçante dans la zone d'interpénétration des deux couches 3, 41.

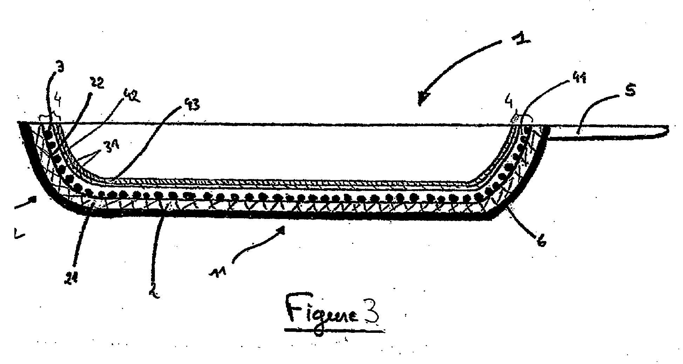

Par ailleurs, la figure 3 montre que la face extérieure 22 du support 2 peut être avantageusement revêtue par un revêtement d'émail 6 extérieur. L'épaisseur de ce revêtement 6 extérieur (ou de couverture) étant classiquement est comprise entre 40 $\mu$m et 500 $\mu$m, en particulier entre 40 $\mu$m et 100 $\mu$m pour un support en alliage d'aluminium (faiblement allié ou en fonte d'aluminium) entre 200 $\mu$m et 500 $\mu$m pour un support en fonte (au sens d'un alliage de fer et de carbone avec plus de 21% de carbone) et enfin entre 100 $\mu$m et 200 $\mu$m pour un support en acier inoxydable.

La calotte 2 métallique servant de support est avantageusement en aluminium ou en alliage d'aluminium, en fonte d'aluminium (ou alliage d'aluminium de fonderie), en acier inoxydable, en fonte (alliage au sens du signe du terme, à savoir un carbone avec plus de 21% de carbone) ou en cuivre.

On donne ci-après deux modes de réalisation pour le procédé de fabrication d'un article culinaire 1 conforme à l'invention selon la première variante de réalisation, qui comprennent chacun les étapes suivantes°:

- une étape de fourniture d'un support métallique 2 comprenant deux faces opposées 21, 22 ;
- une étape d'application sur au moins l'une des faces opposées 21, d'une composition céramique ou métallique 3a sous forme d'une dispersion aqueuse d'une poudre céramique ou métallique ; et
- une étape de frittage de la composition céramique ou métallique 3a pour former la base dure continue 3.

Dans le premier mode de réalisation du procédé de l'invention, le support 2 présente la forme finale d'un article culinaire, avec une face intérieure 21 concave destinée à être disposée du côté des aliments susceptibles d'être introduits dans ledit article 1, et une face extérieure 22 convexe destinée à être disposée du côté d'une source de chaleur. En d'autres termes, la mise en forme de l'article culinaire est réalisée préalablement au dépôt de tout revêtement tant interne qu'externe.

Dans le deuxième mode de réalisation du procédé de l'invention, l'étape de mise en forme du support 2 est réalisée après l'étape de réalisation du revêtement antiadhésif 4 sur la base dure interne discontinue 3. On utilise donc un support plan, par exemple un disque, qui sera embouti après l'étape de frittage.

Pour les deux modes de réalisation, l'étape d'application de la composition céramique ou métallique 3a sur l'une au moins des faces 21 du support est précédée d'une étape de préparation de surface.

Avantageusement, l'application de la composition céramique ou métallique 3a sur la face intérieure 21 est précédée d'une étape de préparation de surface qui peut varier en fonction de la nature des supports :

- dégraissage acide pour un support en acier ;
- microsablage pour un support en acier inoxydable
- dégraissage suivi ou non d'un satinage, brossage ou sablage pour un support en alliage d'aluminium, et un grenaillage pour un support en fonte.

Pour les deux modes de réalisation du procédé de l'invention, la composition aqueuse 3a comprend 45% à 75% en poids d'une poudre de céramique ou métallique, avec au moins un élément absorbant le rayonnement laser à une longueur d'onde de l'ordre de 1 μm, qui représente 1% par rapport au poids total de ladite poudre d'au moins.

A titre de composition céramique ou métallique (3a) utilisable dans le procédé de l'invention, il est possible d'utiliser une barbotine aqueuse de fritte d'émail, ou une suspension aqueuse d'alumine, ou de dioxyde de titane, ou encore une suspension aqueuse de poudre d'acier inoxydable (de préférence adaptée à un usage alimentaire) ou un mélange de ces différents composés.

Pour les deux modes de réalisation du procédé de l'invention, l'étape de frittage est réalisée par un rayonnement laser irradiant au moins partiellement la ou les face(s) 21, 22 revêtue(s) de la composition réfractaire 3a à une longueur d'onde de l'ordre de 1 μm. Le rayonnement laser apporte l'énergie nécessaire pour fritter les parties irradiées revêtues de ladite composition réfractaire 3a et réaliser ledit revêtement céramique 3.

Pour le frittage par voie laser, on peut utiliser soit un laser fibré de type YAG travaillant à une puissance de 50 Watts et émettant à une longueur d'onde de 1064 nm, soit un laser ligne travaillant à une puissance de l'ordre de 350 Watts et émettant à une longueur d'onde de 980 nm. La puissance du laser (fibré ou ligne) doit être adaptée à la cadence de production et peut éventuellement dépasser les 50 W ou 350 W.

Selon une première alternative du procédé de l'invention, la composition céramique ou métallique 3a est appliquée de manière à former une couche non frittée 3 continue et l'étape de frittage est réalisée par un rayonnement laser irradiant par un balayage discontinu de cette couche non frittée 3.

Selon une deuxième alternative du procédé de l'invention, la composition céramique ou métallique 3a est appliquée de manière à former une couche non frittée 3 discontinue et l'étape de frittage est réalisée par un rayonnement laser irradiant par un balayage discontinu et/ou continu ladite couche non frittée 3.

Le balayage discontinu peut par exemple être réalisé par un laser fibré de 4000W avec un spot de 800 μm, qui décrit en automatique une trame définie à l'avance et représentant un nombre de pixels (en dpi, ou nombre de points d'impacts laser) sur la surface des disques. Ceci permet de ne pas fritter les parties susceptibles d'être déformées lors de la mise en forme du support (notamment par emboutissage).

Dans le cas d'un balayage discontinu du rayonnement laser, celui-ci est généralement immédiatement suivi d'une étape d'élimination des particules non frittées (non adhérentes au support), qui peut être réalisée par soufflage, brossage, des jets d'eau, des jets d'air, un bain d'immersion, par balayage, par vibrations ou ultrasons.

Pour les deux modes de réalisation du procédé de l'invention, la dispersion suspension aqueuse de poudre céramique ou métallique peut être appliquée sur la face intérieure 21 du support 2 par pulvérisation pneumatique avec une pression de pulvérisation égale ou supérieure à 4 bars et la quantité d'émail déposée sur ladite face intérieure 21 est comprise entre 0,1 g/dm$^2$ et 3 g/dm$^2$.

Pour les deux modes de réalisation du procédé de l'invention, le revêtement antiadhésif 4 sur la couche d'émail 3 est réalisé par dépôt d'au moins une couche de composition 4a à base de résine fluorocarbonée, puis une étape de frittage pour former un revêtement antiadhésif 4 se présentant sous forme d'un réseau continu fritté de résine fluorocarbonée, et ce, quelle que soit la nature de la composition céramique (notamment une suspension aqueuse d'alumine ou de dioxyde de titane ou encore une barbotine aqueuse de fritte d'émail) ou métallique (notamment suspension aqueuse de poudre d'acier inoxydable).

Le frittage de revêtement antiadhésif 4 peut être réalisé soit thermiquement dans un four, à une température comprise entre 370°C et 430°C, soit avec un laser $CO_2$ dont la longueur d'onde est de 10,6 $\mu$m. Cette longueur d'onde permet d'avoir un traitement thermique plus homogène.

**EXEMPLES**

**Produits**

Lasers

- Laser fibré travaillant à une puissance de 4 KW et émettant à une longueur d'onde de 1064 nm (exemples 1, 6)

    - Source : YAG-Nd
    - Vitesse de balayage : entre 10 et 15 m/s
    - Diamètre du spot : entre 800 et 1200 $\mu$m

- Laser fibré travaillant à une puisssance de 5 KW et émettant à une longueur d'onde de 1064 nm (exemples 2, 7)

    - Source : YAG-Nd
    - Vitesse de balayage : entre 10 et 15 m/s
    - Diamètre du spot : entre 800 et 1200 $\mu$m

- Laser fibré travaillant à une puissance de 50 W et émettant à une longueur d'onde de 1064 nm (exemples 3, 4, 5)

    - Source : Ytterbium
    - Vitesse de balayage : entre 200 et 800 mm/s
    - Vectorisation : entre 10 et 100 $\mu$m
    - Diamètre du spot : 100 $\mu$m

Supports

- disques d'aluminium 8128 de 300 mm de diamètre (exemples 1, 2, 6, et 7), destinés à être emboutis pour former la calotte d'un article culinaire,
- plaquettes carrées en aluminium 4917 de 100 mm de coté (exemples 3 à 5)

Compositions de revêtement : il s'agit de suspensions aqueuses de fritte d'émail ou de poudres d'alumine, de dioxyde de titane ou d'acier, dont les caractéristiques sont présentées ci-dessous :

- Fritte F1 d' « émail pour aluminium » de composition pondérale:

    $Al_2O_3$ : moins de 1% ;
    $B_2O_3$ : moins de 1% ;
    BaO : moins de 1% ;
    $K_2O$ : 5 à 20% ;
    $Li_2O$ : moins de 4% ;
    $Na_2O$ : 10 à 25% ;
    $P_2O_2$ : moins de 4% ;
    $SiO_2$ : 30 à 40% ;
    $TiO_2$ : 15 à 30% ;
    $V_2O_5$ : moins de 10%.

- Fritte FC1 d' « émail pour aluminium » d e composition pondérale:

    $Al_2O_3$ : moins de 1% ;
    $B_2O_3$ : moins de 1% ;
    BaO : moins de 1% ;
    $K_2O$ : 12% ;
    $Li_2O$ : moins de 4% ;
    $Na_2O$ : 18% ;
    $P_2O_5$ : moins de 4% ;
    $SiO_2$ : 35% ;
    $TiO_2$ : 22% ;
    $V_2O_5$ : moins de 10%.

- Fritte F2 d' « émail pour tôle acier » de composition pondérale:

    $SiO_2$ : > 55%,
    $B_2O_3$ : 10% environ,
    $Na_2O$ : 10% environ,
    $Li_2O$ : < 5%,
    Oxydes de baryum, cobalt, nickel, cuivre, titane, manganèse : < 3% pour chacun des composés.

- Poudre d'alumine de granulométrie d50<10 $\mu$m,

- Poudre de dioxyde de titane de granulométrie d50<5 $\mu$m,

- Poudre d'acier inoxydable 304 de granulométrie d50<10 $\mu$m.

Les pourcentages indiqués sont tous des pourcentages massiques.

Absorbeurs

- Oxyde de fer III (Fe$_2$O$_3$) ou oxyde de fer II (FeO)

## Tests

Evaluation de la résistance à l'abrasion

On évalue la résistance à l'abrasion du revêtement antiadhésif formée en soumettant celui-ci à l'action d'un tampon abrasif de type SCOTCH BRITE (marque déposée) vert.
La résistance à l'abrasion du revêtement est estimée quantitativement par le nombre de passages au tampon nécessaires pour créer la première rayure (correspondant à l'apparition du métal constitutif du support).

Evaluation de l'anti-adhérence

L'anti-adhérence est mesurée en fonction du nettoyage plus ou moins facile du lait carbonisé. La cotation est la suivants :

- 100 : signifie que la pellicule de lait carbonisé est éliminée complètement par simple application d'un jet d'eau du robinet de cuisine ;
- 50 : signifie qu'il faut ajouter des mouvements circulaires de l'objet sous le jet d'eau pour décoller complètement la pellicule carbonisée ;
- 25 : signifie qu'il faut laisser tremper pendant 10 minutes et éventuellement forcer le départ en passant une éponge humide pour éliminer complètement la pellicule ;
- 0 : signifie qu'à l'issue du processus précédent, tout ou partie de la pellicule carbonisée reste adhérente.

Evaluation de l'adhérence du revêtement fritté sur le support

L'adhérence du revêtement céramique ou métallique fritté sur le support est également évaluée. Pour cela, on effectue un test par quadrillage selon la norme ISO 2409, suivi d'une immersion de l'article pendant 9 heures (par 3 cycles de trois heures dans de l'eau bouillante). Puis, on observe si le revêtement antiadhésif présente ou non un décollement.
La cotation est la suivante :

- aucun carré ne doit être décollé pour obtenir une cotation de 100 (adhérence excellente) ;

- en cas de décollement la valeur relevée est égale à 100 diminuée du nombre de carrés décollés.

Evaluation de la tenue à l'impact du revêtement fritté

Pour évaluer la tenue à l'impact du revêtement fritté, on procède de la manière suivante : la plaquette est soumise à l'action d'un poinçon hémisphérique de 20 mm de diamètre, d'un poids de 2kg et chutant de 50 cm sur l'envers. On observe la face recouverte.
Puis, sur la partie impactée, on applique fermement un ruban adhésif que l'on arrache violemment et on examine le ruban au microscope optique. L'absence de poussière indique une excellente adhésion de la base dure sur le support.
D'une manière générale pour des applications culinaires c'est la face intérieure au contact des aliments qui doit être traitée selon le procédé de l'invention.
Dans les exemples, on applique une composition de revêtement selon le procédé de l'invention à l'une des faces des substrats. Après retournement du support la seconde face peut soit être traitée de la même manière (c'est-à-dire par frittage par voie laser) soit traitée de manière traditionnelle (c'est-à-dire par cuisson dans un four à une température de l'ordre de 560°C).

**EXEMPLE 1 :**

**à partir d'une barbotine aqueuse à base de fritte d'émail « aluminium » avec absorbeur et frittage par voie laser**

Mode opératoire

1. On utilise comme support un disque d'aluminium de 300 mm de diamètre. Ce disque est dégraissé puis brossé pour obtenir une rugosité Ra de 1.5 μm.
2. On prépare une barbotine aqueuse de fritte d'émail à partir de la fritte F1 d'émail « aluminium » suivant les proportions indiquées ci-dessous :

- 100 parties en poids de fritte,
- 60 parties en poids d'eau, et
- 1 partie en poids d'absorbeur.

3. Puis, on applique cette barbotine sur l'une des faces du support par pulvérisation pneumatique sous 5 bars : le dépôt obtenu est discontinu et le poids sec déposé avant frittage est de 1,2°g.
4. Pour le frittage laser du dépôt émaillé, on utilise le laser fibré travaillant à 4 KW et émettant à une longueur d'onde de 1064 nm : le rayonnement laser balaie la totalité de la surface et vient fritter les gouttelettes d'émail pour former une couche d'émail discontinue.
5. L'émail en excès non fritté est éliminé par brossage et soufflage. Le disque ne s'est pas échauffé de manière sensible car il reste manipulable à main nue.

6. Puis, on applique successivement sur chacune des faces une couche de primaire et d'une couche de finition à base de PTFE. L'application de ces couches antiadhésives à base de PTFE peut se faire par sérigraphie ou par pulvérisation pneumatique (du rouleau).

7. Le frittage de ces couches antiadhésives se fait par étuvage à 415°C pendant 7 minutes.

8. Enfin, le disque ainsi préparé est embouti pour former la calotte d'une poêle conforme à la présente invention, de manière que la face intérieure soit celle comportant une base dure sous le revêtement antiadhésif.

On constate que le revêtement intérieur (sur la face intérieure) ne présente pas de craquelures visibles.

Evaluation de la résistance à l'abrasion

Les résultats du test d'abrasion montrent qu'après 20 000 passages en « aller/retour » d'un tampon abrasif, le revêtement ne présente pas de rayures au métal.

Evaluation de l'adhérence du revêtement fritté sur le support

L'adhérence mesurée par le test de quadrillage après immersion est excellente : il n'y a pas de carreaux arrachés.

Evaluation de l'anti-adhérence (test dit « au lait « brûlé »

L'anti-adhérence évaluée par le test au lait brulé donne 50.

**EXEMPLE COMPARATIF C1.1 :**

**à partir d'une barbotine aqueuse à base de fritte d'émail « aluminium » sans absorbeur et frittage par voie laser**

Mode opératoire

1. On utilise comme support un disque d'aluminium de 300 mm de diamètre. Ce disque est dégraissé puis brossé pour obtenir une rugosité Ra de 1.5 $\mu$m.

2. On prépare une barbotine aqueuse de fritte d'émail à partir de la fritte FC1 d'émail « aluminium » suivant les proportions indiquées ci-dessous :

- ■ 100 parties en poids de fritte, et
- ■ 60 parties en poids d'eau.

3. Puis, on applique cette barbotine sur l'une des faces du support par pulvérisation pneumatique sous 5 bars : le dépôt obtenu est discontinu et le poids sec déposé est de 1,2 g avant frittage.

4. Pour le frittage laser du dépôt émaillé, on utilise le laser fibré travaillant à 4 KW et émettant à une longueur d'onde de 1064 nm : le

rayonnement laser balaie la totalité de la surface.

La fritte n'absorbant pas le rayonnement on ne constate pas d'échauffement de la matière, la base dure reste sous la forme d'un dépôt de poudre non adhérent au substrat métallique.

L'absence d'un élément absorbeur en tant que tel ne permet pas la réalisation de la base dure. Par ailleurs on note que le $TiO_2$ pourtant présent dans la composition de la fritte à hauteur de 22% ne confère pas à cette dernière des propriétés absorbantes vis-à-vis du rayonnement laser.

**EXEMPLE COMPARATIF C1.2 :**

**à partir d'une barbotine aqueuse à base de fritte d'émail « aluminium » et frittage par étuvage à 560°C**

Mode opératoire

1. On utilise comme support un disque d'aluminium de 300 mm de diamètre. Ce disque est dégraissé puis brossé pour obtenir une rugosité Ra de 1.5 $\mu$m.

2. On prépare une barbotine aqueuse de fritte d'émail à partir de la fritte F1 d'émail « aluminium » suivant les proportions indiquées ci-dessous :

- ■ 100 parties en poids de fritte, et
- ■ 60 parties en poids d'eau.

3. Puis, on applique cette barbotine sur l'une des faces du support par pulvérisation pneumatique sous 5 bars : le dépôt obtenu est discontinu et le poids sec déposé avant frittage est compris entre 0,6 et 0,8 g.

4. La couche discontinue est étuvée dans un four à 560°C pendant 8 minutes pour obtenir son durcissement.

5. Puis, on applique successivement sur chacune des faces du support une couche de primaire et d'une couche de finition à base de PTFE. L'application de ces couches antiadhésives à base de PTFE peut se faire par sérigraphie ou par pulvérisation pneumatique (du rouleau).

6. Le frittage de ces couches antiadhésives se fait par étuvage à 415°C pendant 7 minutes.

7. Enfin, le disque ainsi préparé est embouti pour former la calotte d'une poêle conforme à la présente invention, de manière que la face intérieure soit celle comportant une base dure sous le revêtement antiadhésif.

Le revêtement intérieur (face intérieure) ne présente pas de craquelures visibles.

Evaluation de la résistance à l'abrasion

Les résultats du test d'abrasion montrent la première rayure (correspondant à l'apparition du métal constitutif du support) n'est observée visuellement (au grossissement optique X 8) qu'après 20000 passages du tampon.

Evaluation de l'adhérence du revêtement fritté sur le support

L'adhérence mesurée par le test de quadrillage après immersion est excellente : il n'y a pas de carreaux arrachés.

Evaluation de l'anti-adhérence (test dit « au lait « brûlé »

L'anti-adhérence évaluée par le test au lait brulé donne 100.
Les résultats des essais sont comparables à ceux obtenus dans l'exemple 1, mais avec une consommation énergétique largement supérieure.
La consommation énergétique $\Delta Q_2$ a été comparée à celle $AQ_1$ d'un frittage par voie laser en se basant sur la formule (1):

$$(1)\ \Delta Q_i = m_i * Cp_i * \Delta T_i$$

Avec :

- i désignant le matériau comme suit :

  ■ i = 1 pour désigner le disque en aluminium,
  ■ i = 2 pour désigner la couche discontinue d'émail

- $Cp_i$ désignant la capacité calorifique du matériau i,
- $\Delta T_i$ désignant la variation de température subie par le matériau i, et
- $m_i$ désignant la masse du matériau,

Un frittage par étuvage à 560°C du disque émaillé engendre une consommation énergétique $\Delta Q_1$ de 194400 J, en considérant que :

- compte tenu de ses dimensions, le disque pèse environ 400 g ($m_1$),
- la variation de température $\Delta T_1$ que subit le support en aluminium est de 560°C-20°C (température ambiante), soit un écart de température de 540K,
- la capacité calorifique $Cp_1$ de l'aluminium est de 900 j/Kg*K.

Pour le calcul de la consommation énergétique $\Delta Q_1$ lors de l'étuvage, nous n'avons pas pris en compte la couche d'émail, car la consommation d'énergie pour cuire 1,2 g d'émail à 560°C est négligeable par rapport à celle nécessaire pour élever la température de 20°C à 560°C d'un disque de 400 g en aluminium. En outre, ce calcul ne prend pas en compte l'ensemble des pertes liées à l'usage du four (four lui-même, air ,convoyeurs).
L'estimation de la consommation énergétique $\Delta Q_2$ du frittage par voie laser a donc été faite en considérant que :

- seule la base dure ($m_2$=1, 2g) est chauffée et non plus tout le disque,
- la variation de température $\Delta T_2$ que subit la fritte d'émail est de 2500°C - 20°C (température ambiante), soit un écart de température de 2420K,
- la capacité calorifique $Cp_2$ de la fritte 800 J/Kg*K.

La consommation énergétique $\Delta Q_2$ du frittage par voie laser n'est que 2381 J, soit une consommation énergétique réduite de plus de 98% (98,7% exactement) par rapport à un étuvage à 560°C.
Le rapport des consommations d'énergie $\Delta Q_1/\Delta Q_2$ donne 1,22%, ce qui correspond à une réduction de la consommation d'énergie de 98,7% lorsqu'on passe d'un étuvage à 560°C à un frittage par voie laser dans les conditions expérimentales indiquées précédemment.
Outre les approximations susmentionnées, le calcul est également approximatif dans la mesure où la température atteinte par la fritte sous l'action du laser a été surestimée.
Par ailleurs, le rendement du laser est de l'ordre de 66% et l'échauffement résiduel du disque est faible (quelques degrés), y compris avec un balayage continu.
Toutefois, la demanderesse a considéré que la prise en compte de l'ensemble des considérations ci-dessus n'était pas de nature à modifier sensiblement le rapport énergétique favorable au laser.

**EXEMPLE 2 :**

**à partir d'une barbotine aqueuse de « fritte d'émail acier » avec absorbeur et frittage par voie laser**

Mode opératoire

1. On utilise comme support un disque d'aluminium de 300 mm de diamètre. Ce disque est dégraissé puis brossé pour obtenir une rugosité Ra de 1.5 μm.
2. On prépare une barbotine aqueuse de fritte d'émail à partir de la fritte F2 d'émail « acier » suivant les proportions indiquées ci-dessous :

  ■ 100 parties en poids de fritte,
  ■ 60 parties en poids d'eau, et

■ 1 partie en poids d'absorbeur.

3. Puis, on applique cette barbotine sur l'une des faces du support par pulvérisation pneumatique sous 5 bars : le dépôt obtenu est discontinu et le poids sec déposé avant frittage est de 1,2 g.

4. Pour le frittage laser du dépôt émaillé, on utilise le laser fibré travaillant à 5 KW et émettant à une longueur d'onde de 1064 nm : le rayonnement laser balaie la totalité de la surface et vient fritter les gouttelettes d'émail pour former une couche d'émail discontinue.

5. L'émail en excès non fritté est éliminé par brossage et soufflage. Le disque ne s'est pas échauffé de manière sensible car il reste manipulable à main nue.

6. Puis, on applique successivement sur chacune des faces une couche de primaire et d'une couche de finition à bas e de PTFE. L'application de ces couches antiadhésives à base de PTFE peut se faire par sérigraphie ou par pulvérisation pneumatique (ou rouleau).

7. Le frittage de ces couches antiadhésives se fait par étuvage à 415°C pendant 7 minutes.

8. Enfin, le disque ainsi préparé est embouti pour former la calotte d'une poêle conforme à la présente invention, dont la face intérieure est

celle qui comprend, sous le revêtement antiadhésif, une base dure émaillée.

On constate que le revêtement intérieur ne présente pas de craquelures visibles.

Evaluation de la résistance à l'abrasion

Les résultats du test d'abrasion montrent qu'après 20 000 passages en « aller/retour » d'un tampon abrasif, le revêtement ne présente pas de rayures au métal.

Evaluation de l'adhérence du revêtement fritté sur le support

L'adhérence mesurée par le test de quadrillage après immersion est excellente : il n'y a pas de carreaux arrachés.

Evaluation de l'anti-adhérence (test dit « au lait « brûlé »

L'anti-adhérence évaluée par le test au lait brulé donne 50.

**EXEMPLE comparatif C2 :**

**à partir d'une barbotine aqueuse de « fritte d'émail acier » sans absorbeur et frittage par étuvage à 560°C**

Mode opératoire

1. On utilise comme support un disque d'aluminium de 300 mm de diamètre. Ce disque est dégraissé puis brossé pour obtenir une rugosité Ra de 1.5 μm.

2. On prépare une barbotine aqueuse de fritte d'émail à partir de la fritte F2 d'émail « acier » suivant les proportions indiquées ci-dessous :

■ 100 parties en poids de fritte, et
■ 60 parties en poids d'eau.

3. Puis, on applique cette barbotine sur l'une des faces du support par pulvérisation pneumatique sous 5 bars : le dépôt obtenu est discontinu et le poids sec déposé avant frittage est de 1,2 g.

4. La couche discontinue est étuvée dans un four à 560°C pendant 8 minutes pour obtenir son durcissement.

La température d'étuvage est insuffisante pour obtenir le durcissement de la base dure, qui reste sous forme pulvérulente sans adhésion au support.

Un étuvage à plus haute température, en particulier à 650°C, qui est une température permettant le durcissement et le frittage de la base dure), conduit par contre à la fusion et à la déformation du support.

La comparaison des exemples 2 et C2 montre donc que le frittage laser permet d'accéder à des formulations de base ayant des points de fusion supérieurs à ceux du substrat.

**EXEMPLE 3 :**

**A partir d'une suspension aqueuse d'alumine sans absorbeur et frittage par voie laser**

Mode opératoire

1. On utilise comme support une plaquette d'aluminium 4917 de forme carrée de 100 mm de côté. Cette plaquette est dégraissée puis satinée.

2. On prépare une dispersion aqueuse contenant 70% en poids de poudre d'alumine.

3. Puis, on applique cette dispersion aqueuse sur l'une des faces du support par pulvérisation pneumatique sous 3 bars : le dépôt obtenu est discontinu et le poids sec déposé avant frittage est de 0,7 g.

4. Pour le frittage laser de la face émaillée, on utilise le laser fibré travaillant à une puissance de 50 W et émettant à une longueur d'onde de 1064 nm: le rayonnement laser balaie la totalité de la surface et vient échauffer les particules d'alumine. Ces particules s'ancrent dans le support aluminium par une fusion superficielle locale du support.

5. On obtient un revêtement discontinu gris clair avec un taux de recouvrement de 50 % et une

rugosité Ra entre 2 et 5 $\mu$m ; l'épaisseur de la base dure étant comprise entre 1 et 5 $\mu$m.

Evaluation de la tenue à l'impact

Immédiatement après la réalisation du choc sur la couche céramique frittée, l'observation de la face revêtue ne montre pas de zones écaillées.

Sur la partie impactée on applique fermement un ruban adhésif que l'on arrache violemment et on examine le ruban au microscope optique : on constate l'absence de poussière sur le ruban, ce qui est révélateur d'une excellente adhésion de la base dure sur le support.

**EXEMPLE 4 :**

**A partir d'une suspension aqueuse de dioxyde de titane sans absorbeur et frittage par voie laser**

Mode opératoire

1. On utilise comme support une plaquette d'aluminium 4917 de forme carrée de 100 mm de côté. Cette plaquette est dégraissée puis satinée.

2. On prépare une dispersion aqueuse contenant 70% en poids de dioxyde de titane.

3. Puis, on applique cette dispersion aqueuse sur l'une des faces du support par pulvérisation pneumatique sous 3 bars : le dépôt obtenu est discontinu et le poids sec déposé avant frittage est de 0,6 g.

4. Pour le frittage laser de la couche d'alumine déposée, on utilise le même laser fibré que celui de l'exemple 3 : le rayonnement laser balaie la totalité de la surface et vient échauffer les particules de dioxyde de titane. Ces particules s'ancrent dans le support aluminium par une fusion superficielle locale du support.

5.On obtient un revêtement discontinu noir avec un taux de recouvrement de 60 % et une rugosité Ra entre 2 et 5 $\mu$m ; l'épaisseur de la base dure étant comprise entre 1 et 5 $\mu$m.

Evaluation de la tenue à l'impact

Immédiatement après la réalisation du choc sur la couche céramique frittée, l'observation de la face revêtue ne montre pas de zones écaillées.

Sur la partie impactée on applique fermement un ruban adhésif que l'on arrache violemment et on examine le ruban au microscope optique : on constate l'absence de poussière sur le ruban, ce qui est révélateur d'une excellente adhésion de la base dure sur le support.

**EXEMPLE 5 :**

**à partir d'une suspension aqueuse de poudre d'acier inoxydable sans absorbeur et frittage par voie laser**

Mode opératoire

1. On utilise comme support une plaquette d'aluminium 4917 de forme carrée de 100 mm de côté. Cette plaquette est dégraissée puis satinée.

2. On prépare une dispersion aqueuse de poudre d'acier inoxydable suivant les proportions indiquées ci-dessous :

- 100 parties en poids de poudre d'inox 304 de diamètre d50<10 $\mu$m,
- 45 parties en poids d'eau déminéralisée,
- 1 partie en poids de tensioactif, et
- 5 parties d'un alcool (typiquement du propanol),

pour obtenir une suspension homogène.

3. Puis, on applique cette dispersion aqueuse sur l'une des faces du support par pulvérisation pneumatique sous 3 bars : le dépôt obtenu est discontinu et le poids sec déposé avant frittage est de 0,4 g.

4. Pour le frittage laser de la couche d'alumine déposée, on utilise le même laser fibré que celui des exemples 3 et 4 : le rayonnement laser balaie la totalité de la surface et vient échauffer les particules d'acier. Ces particules s'ancrent dans le support aluminium par une fusion superficielle locale du support.

5. On obtient un revêtement discontinu noir avec un taux de recouvrement de 30 % et une rugosité Ra entre 2 et 5 $\mu$m ; l'épaisseur de la base dure étant comprise entre 1 et 15 $\mu$m.

Evaluation de la tenue à l'impact

Immédiatement après la réalisation du choc sur la couche céramique frittée, l'observation de la face revêtue ne montre pas de zones écaillées.

Sur la partie impactée on applique fermement un ruban adhésif que l'on arrache violemment et on examine le ruban au microscope optique : on constate l'absence de poussière sur le ruban, ce qui est révélateur d'une excellente adhésion de la base dure sur le support.

**EXEMPLE 6 :**

**A partir d'une pâte huileuse d'une fritte d'émail aluminium avec absorbeur et frittage par voie laser**

Mode opératoire

1. On utilise comme support un disque d'aluminium de 300 mm de diamètre. Ce disque est dégraissé puis brossé pour obtenir une rugosité Ra de 1.5 $\mu$m.
2. On prépare une suspension huileuse de fritte d'émail à partir de la fritte F1 d'émail « aluminium » suivant les proportions indiquées ci-dessous :

■ 100 parties en poids de fritte d'émail,
■ 120 parties en poids d'une huile à base de dérivés résiniques et terpinéiques,
■ 40 parties en poids d'une essence de pétrole de type D60, et
■ 2 parties en poids d'absorbeur.

3. Puis, on applique cette dispersion sur l'une des faces du support par pulvérisation pneumatique sous 3 bars :

- du fait de la forte aptitude à l'étalement de la dispersion huileuse, il n'est pas possible d'obtenir une couche discontinue,
- on modifie alors la composition de la dispersion huileuse comme suit :

• 100 parties en poids de fritte d'émail,
• 70 parties en poids d'huile, et
• 2 parties en poids d'absorbeur.

- La couche est déposée uniformément mais de manière discontinue par sérigraphie. Pour immobiliser les gouttes et empêcher leur coalescence il est nécessaire de sécher par air chaud ou infrarouge le revêtement déposé avant de fritter par laser.

4. Pour le frittage laser du dépôt émaillé, on utilise le même laser fibré que celui de l'exemple 1 :

- le rayonnement laser doit être augmenté et la vitesse de balayage diminuée, pour parcourir la totalité de la surface et permettre le frittage des gouttelettes d'émail. Lors du passage du laser on constate un dégagement important de fumées noires.
- le revêtement obtenu est noir et recouvert d'une fine poussière de carbone.

5. Puis, on applique successivement sur la couche d'émail ainsi formée une couche de primaire et d'une couche de finition à base de PTFE. L'application de ces couches antiadhésives à base de PTFE peut se faire par sérigraphie ou par pulvérisation pneumatique (ou rouleau).

6. Le frittage de ces couches antiadhésives se fait par étuvage à 415°C pendant une durée de l'ordre de 7 minutes.

7. Enfin, le disque ainsi préparé est embouti pour former la calotte d'une poêle conforme à la présente invention, de manière que la face intérieure soit celle comportant une base dure sous le revêtement antiadhésif.

Ce revêtement intérieur (face intérieure) ne présente pas de craquelures visibles.

Evaluation de l'adhérence du revêtement fritté sur le support

L'adhérence mesurée par le test de quadrillage après immersion est médiocre : il y a plusieurs carreaux arrachés en raison de la présence de particules de carbone non adhérentes consécutives à la combustion de l'huile.

**EXEMPLE 7 :**

**Frittage par voie laser en 2 étapes d'une base dure en émail, puis d'un revêtement antiadhésif à base de PTFE**

Mode opératoire

1. On utilise comme support un disque d'aluminium de 300 mm de diamètre. Ce disque est dégraissé puis brossé pour obtenir une rugosité Ra de 1.5 $\mu$m.
2. On prépare une barbotine aqueuse de fritte d'émail à partir de la fritte d'émail F1 « aluminium » suivant les proportions indiquées ci-dessous :

■ 100 parties en poids de fritte,
■ 60 parties en poids d'eau, et
■ 1 partie en poids d'absorbeur.

3. Puis, on applique cette barbotine sur l'une des faces du support par pulvérisation pneumatique sous 5 bars : le dépôt obtenu est discontinu et le poids sec déposé avant frittage est de 1,2 g.

4. Pour le frittage laser du dépôt émaillé, on utilise le même laser fibré que celui de l'exemple 2 (travaillant à une puissance de 4 KW) : le rayonnement laser balaie la totalité de la surface et vient fritter les gouttelettes d'émail pour former une couche d'émail discontinue sur chacune des faces du support.

5. Puis, on applique successivement sur la couche d'émail ainsi formée une couche de primaire et une couche de finition à base de PTFE. L'application de ces couches antiadhésives à base de PTFE peut se faire par sérigraphie ou par pulvérisation pneumatique (ou rouleau).

6.Le frittage de ces couches antiadhésives se fait également par voie laser : l'échauffement de la base dure céramique sous-jacente suffit pour assurer le frittage du revêtement PTFE.

7. Enfin, le disque ainsi préparé est embouti pour former la calotte d'une poêle conforme à la présente invention, de manière que la face intérieure soit celle comportant une base dure sous le revêtement antiadhésif.

Le revêtement intérieur (sur la face intérieure) de l'article ainsi obtenu ne présente pas de craquelures visibles.

Evaluation de l'adhérence du revêtement fritté sur le support

L'adhérence mesurée par le test de quadrillage après immersion est excellente : il n'y a pas de carreaux arrachés.

**Revendications**

1. Article (1) comprenant un support métallique (2) comprenant deux faces opposées (21, 22), et un revêtement céramique ou métallique (3) recouvrant l'une au moins des faces (21, 22) dudit support (2), ledit revêtement céramique ou métallique (3) présentant un point de ramollissement qui est supérieur à la température de fusion du support (2), et comprenant au moins un élément absorbant le rayonnement laser à une longueur d'onde de l'ordre de 1 $\mu$m, représentant au moins 1% du poids dudit revêtement (3),
**caractérisé en ce que** ledit revêtement céramique ou métallique (3) est une couche discontinue présentant une rugosité de surface Ra comprise entre 2 $\mu$m et 10 $\mu$m et une épaisseur comprise entre 5 et 30 $\mu$m.

2. Article selon la revendication 1, **caractérisé en ce que** l'élément absorbant est choisi parmi les aciers inoxydables, les oxydes métalliques, le carbure de silicium, le carbure de tungstène, le graphite, les pigments minéraux et les substances colorantes.

3. Article selon la revendication 1 ou 2, **caractérisé en ce que** ledit revêtement céramique ou métallique (3) est une couche discontinue d'alumine ou et/ou de dioxyde de titane.

4. Article selon la revendication 1 ou 2, **caractérisé en ce que** ledit revêtement céramique ou métallique (3) est une couche discontinue d'acier inoxydable.

5. Article selon la revendication 1 ou 2, **caractérisé en ce que** ledit revêtement céramique ou métallique (3) est un revêtement en émail.

6. Article selon la revendication 5, **caractérisé en ce que** le support (2) est en aluminium ou en alliage d'aluminium, et le revêtement (3) comprend au plus 20% en poids de fondants par rapport au poids dudit revêtement (3).

7. Article selon la revendication 5, **caractérisé en ce que** le support (2) est en acier inoxydable et le revêtement (3) comporte au moins 65% d'oxyde de silicium en poids.

8. Article selon l'une quelconque des revendications précédentes, **caractérisé en ce que** l'épaisseur du revêtement céramique ou métallique (3) est comprise entre 5 $\mu$m et 15 $\mu$m.

9. Article selon l'une quelconque des revendications précédentes, **caractérisé en ce qu'**il comporte en outre un revêtement antiadhésif (4) recouvrant ledit revêtement (3), ledit revêtement antiadhésif (4) comportant au moins une couche (41) comprenant au moins une résine fluorocarbonée seule ou en mélange avec une résine d'accrochage thermostable résistant à au moins 200°C, cette résine formant un réseau continu fritté.

10. Article culinaire (1) selon l'une quelconque des revendications précédentes, **caractérisé en ce qu'**il se présente sous forme d'un disque.

11. Article (1) selon l'une quelconque des revendications précédentes, **caractérisé en ce qu'**il constitue un article culinaire (1) dont une des faces opposées (21) est une face intérieure (21) concave destinée à être disposée du côté d'aliments susceptibles d'être introduits dans ledit article (1), et une seconde desdites faces opposées (22) est une face extérieure (22) convexe destinée à être disposée vers une source de chaleur.

12. Procédé de fabrication d'un article (1), comprenant les étapes successives suivantes :

- une étape de fourniture d'un support métallique (2) comprenant deux faces opposées (21, 22), puis
- une étape d'application d'une composition céramique ou métallique (3a) sur au moins l'une desdites faces (21, 22) du dit support (2) pour former une couche non frittée (3), ladite composition céramique ou métallique (3a) comprenant une poudre céramique ou métallique et au moins un élément absorbant le rayonnement laser à une longueur d'onde de l'ordre de 1 $\mu$m,

qui représente au moins 1% du poids de ladite poudre,

- une étape de frittage par un rayonnement laser à une longueur d'onde de l'ordre de 1 μm et irradiant au moins partiellement ladite couche discontinue (3),

ledit procédé étant **caractérisé en ce que** :

- la composition céramique ou métallique (3a) est une dispersion aqueuse, et
- l'une au moins des étapes d'application de la composition aqueuse (3a) et de frittage de la couche non frittée (3) est réalisée de manière à former un revêtement céramique ou métallique (3) discontinu.

**13.** Procédé selon la revendication 12, **caractérisé en ce que** la poudre céramique ou métallique est présente dans la composition céramique ou métallique (3a) à raison de 45% à 75% en poids du poids total de ladite composition (3a).

**14.** Procédé selon la revendication 12 ou 13, **caractérisé en ce que** la composition céramique ou métallique (3a) est appliquée de manière à former une couche non frittée (3) continue et l'étape de frittage est réalisée par un rayonnement laser irradiant par un balayage discontinu ladite couche non frittée (3).

**15.** Procédé selon la revendication 12 ou 13, **caractérisé en ce que** la composition céramique ou métallique (3a) est appliquée de manière à former une couche non frittée (3) discontinue et l'étape de frittage est réalisée par un rayonnement laser irradiant par un balayage discontinu et/ou continu ladite couche non frittée (3).

**16.** Procédé selon l'une quelconque des revendications 12 à 15, **caractérisé en ce qu'**on utilise comme composition céramique ou métallique (3a) une barbotine aqueuse de fritte d'émail.

**17.** Procédé selon l'une quelconque des revendications 12 à 16, **caractérisé en ce qu'**on utilise comme composition céramique ou métallique (3a) une suspension aqueuse d'alumine ou et/ou de dioxyde de titane.

**18.** Procédé selon l'une quelconque des revendications 12 à 17, **caractérisé en ce qu'**on utilise comme composition céramique ou métallique (3a) une suspension aqueuse de poudre d'acier inoxydable.

**19.** Procédé selon l'une quelconque des revendications 12 à 18, **caractérisé en ce que** la composition céramique ou métallique (3a) est appliquée sur l'une des faces (21) du support (2) par pulvérisation pneumatique sous pression, et **en ce que** la quantité de composition céramique ou métallique (3a) déposée est comprise entre 0,1 g/dm$^2$ et 3 g/dm$^2$.

**20.** Procédé selon la revendication 19, **caractérisé en ce que** l'étape de frittage du revêtement antiadhésif (4) est réalisée :

• soit thermiquement par une cuisson dans un four à une température comprise entre 370°C et 430°C,
• soit à l'aide d'un laser CO$_2$ dont la longueur d'onde est de 10, 6 μm.

**Claims**

**1.** An article (1) comprising a metal substrate (2) comprising two opposed faces (21, 22), and a ceramic or metallic coating (3) covering at least one of the faces (21, 22) of said substrate (2), said ceramic or metallic coating (3) having a softening point higher than the melting temperature of the substrate (2) and comprising at least one component that absorbs laser radiation at a wavelength of the order of 1 μm, constituting at least 1% of the weight of said coating (3),
**characterised in that** said ceramic or metallic coating (3) is a discontinuous layer having a surface roughness Ra of between 2 μm and 10 μm and a thickness of between 5 and 30 μm.

**2.** The article according to Claim 1, **characterised in that** the absorbing component is selected from among the stainless steels, the metal oxides, silicon carbide, tungsten carbide, graphite, mineral pigments and dyes.

**3.** The article according to Claim 1 or 2, **characterised in that** said ceramic or metallic coating (3) is a discontinuous layer of alumina and/or titanium dioxide.

**4.** The article according to Claim 1 or 2, **characterised in that** said ceramic or metallic coating (3) is a discontinuous layer of stainless steel.

**5.** The article according to Claim 1 or 2, **characterised in that** said ceramic or metallic coating (3) is an enamel coating.

**6.** The article according to Claim 5, **characterised in that** the substrate (2) is made of aluminium or aluminium alloy, and the coating (3) comprises at most 20% by weight of fluxes in relation to the weight of said coating (3).

**7.** The article according to Claim 5, **characterised in that** the substrate (2) is made of stainless steel, and the coating (3) comprises at least 65% by weight of silicon oxide.

8. The article according to any one of the preceding claims, **characterised in that** the thickness of the ceramic or metallic coating (3) is between 5 μm and 15 μm.

9. The article according to any one of the preceding claims, **characterised in that** it is additionally included a non-stick coating (4) covering said coating (3), said non-stick coating (4) including at least one layer (41) containing at least one fluorocarbon resin, alone or mixed with a thermally stable bonding resin resisting at least 200°C, this resin forming a continuous fritted lattice.

10. The cookware article (1) according to any one of the preceding claims, **characterised in that** the article occurs in the form of a disc.

11. The article (1) according to any one of the preceding claims, **characterised in that** the article constitutes an article of cookware (1), one of whose opposite faces (21) is a concave inner face (21), intended to be put on the side the food will be placed in said article (1), and a second of said opposite faces (22) is a convex outer face (22), intended to be set facing a heat source.

12. A manufacturing process for an article (1), comprising the following steps in succession:

     - a step of supplying a metal substrate (2) comprising two opposite faces (21, 22), then
     - a step of applying a ceramic or metallic composition (3a) to at least one of said faces (21, 22) of said substrate (2) to form a non-fritted layer (3), said ceramic or metallic composition (3a) comprising a ceramic or metallic powder and at least one component that absorbs laser radiation at a wavelength of the order of 1 μm, making up at least 1% of the weight of said powder,
     - a step of sintering by laser beam at a wavelength of the order of 1 μm and irradiating at least partially said discontinuous layer (3),

     said process being **characterised in that**:

     - the ceramic or metallic composition (3a) is an aqueous dispersion, and
     - at least one of the applying steps of the aqueous composition (3a) or sintering the non-fritted layer (3) is carried out so as to form a discontinuous ceramic or metallic coating (3).

13. The process according to Claim 12, **characterised**

**in that** the ceramic or metallic powder is present in the ceramic or metallic composition (3a) in the amount of 45% to 75% by weight of the total weight of said composition (3a).

14. The process according to Claim 12 or 13, **characterised in that** the ceramic or metallic composition (3a) is applied so as to form a continuous non-fritted layer (3) and the sintering step is carried out by a laser beam irradiating said non-fritted layer (3) in a discontinuous scan.

15. The process according to Claim 12 or 13, **characterised in that** the ceramic or metallic composition (3a) is applied so as to form a discontinuous non-fritted layer (3) and the sintering step is carried out by a discontinuous and/or continuous scan of said non-fritted layer.

16. The process according to any one of Claims 12 to 15, **characterised in that** an aqueous enamel frit slip is used as the ceramic or metallic composition (3a).

17. The process according to any one of Claims 12 to 16, **characterised in that** an aqueous suspension of alumina and/or of titanium dioxide is used as the ceramic or metallic composition (3a).

18. The process according to any one of Claims 12 to 17, **characterised in that** an aqueous suspension of stainless steel powder is used as the ceramic or metallic composition (3a).

19. The process according to any one of Claims 12 to 18, **characterised in that** the ceramic or metallic composition (3a) is applied to one of the faces (21) of substrate (2) by pneumatic spraying under pressure, and **characterised in that** the quantity of ceramic or metallic composition (3a) deposited is between 0.1 $g/dm^2$ and 3 $g/dm^2$.

20. A process according to Claim 19, **characterised in that** the non-stick coating (4) sintering step is carried out:

     - either thermally, by firing in an oven at a temperature between 370°C and 430°C,
     or
     - using a $CO_2$ laser with a wavelength of 10.6 μm.

**Patentansprüche**

1. Gegenstand (1) umfassend eine Metallunterlage (2) mit zwei gegenüberliegenden Seiten (21, 22) und einer keramischen oder metallischen Beschichtung (3), die mindestens eine der Seiten (21, 22) der Unterlage (2) bedeckt, wobei die keramische oder metallische Beschichtung (3) einen Erweichungspunkt hat, der oberhalb des Schmelzpunktes der Unterlage (2) liegt und mindestens ein bei einer Wellenlänge von etwa 1 μm laserstrahlungsabsorbierendes Element umfasst, welches mindestens 1% des Gewichts der Beschichtung (3) ausmacht, **dadurch gekennzeichnet, dass** die keramische oder metallische Beschichtung (3) eine unterbrochene Schicht mit einer Oberflächenrauhigkeit Ra zwischen 2 μm und 10 μm und einer Dicke zwischen 5 und 30 μm ist.

2. Gegenstand nach Anspruch 1, **dadurch gekennzeichnet, dass** das absorbierende Element aus einer Gruppe gewählt ist, die rostfreie Stähle, Metalloxide, Siliziumkarbit, Wolframkarbit, Graphit, mineralische Pigmente und Farbsubstanzen umfasst.

3. Gegenstand nach Anspruch 1 oder 2, **dadurch gekennzeichnet, dass** die keramische oder metallische Beschichtung (3) eine unterbrochene Schicht aus Aluminiumoxid oder und/oder Titaniumdioxid ist.

4. Gegenstand nach Anspruch 1 oder 2, **dadurch gekennzeichnet, dass** die keramische oder metallische Beschichtung (3) eine unterbrochene Schicht aus rostfreiem Stahl ist.

5. Gegenstand nach Anspruch 1 oder 2, **dadurch gekennzeichnet, dass** die keramische oder metallische Beschichtung eine Emaillebeschichtung ist.

6. Gegenstand nach Anspruch 5, **dadurch gekennzeichnet, dass** die Unterlage (2) aus Aluminium oder eine Aluminiumlegierung besteht und die Beschichtung höchstens 20 Gewichtsprozent Schmelzzuschläge enthält in Bezug auf das Gewicht der Beschichtung (3).

7. Gegenstand nach Anspruch 5, **dadurch gekennzeichnet, dass** die Unterlage (2) aus rostfreiem Stahl besteht und die Beschichtung mindestens 65 Gewichtsprozent Siliziumoxid enthält.

8. Gegenstand nach einem der vorstehenden Ansprüche, **dadurch gekennzeichnet, dass** die Dicke der keramischen oder metallischen Beschichtung (3) zwischen 5μm und 15μm trägt.

9. Gegenstand nach einem der vorstehenden Ansprüche, **dadurch gekennzeichnet, dass** er unter anderem eine Antihaftbeschichtung umfasst, die die Beschichtung (3) bedeckt, wobei die Antihaftbeschichtung (4) mindestens eine Schicht (41) umfasst, die mindestens ein Fluorkarbonharz umfasst, das selbstständig oder in einer Mischung mit einem thermostabilen Haftharz vorliegt, welches Temperaturen bis mindestens 200°C widersteht, wobei dieses Harz ein durchgehendes, gesintertes Netzwerk bildet.

10. Küchengegenstand (1) nach einem der vorstehenden Ansprüche, **dadurch gekennzeichnet, dass** er in Form einer Platte erscheint.

11. Gegenstand (1) nach einem der vorstehenden Ansprüche, **dadurch gekennzeichnet, dass** er aus einem Küchengegenstand besteht, eine dessen gegenüberliegender Oberflächen (21) eine konkave Innenseite (21) ist, um auf der Seite der in den Gegenstand (1) einzuführenden Nahrungsmittel angeordnet zu sein, und eine zweite der sich gegenüberliegenden Seiten (22) eine konvexe Außenseite (22) ist, um in Richtung einer Wärmequelle angeordnet zu sein.

12. Verfahren zur Fertigung eines Gegenstands (1), umfassend die folgenden aufeinanderfolgenden Schritte:

    - einen Verfahrensschritt des Bereitstellens einer Metallunterlage (2) mit zwei gegenüberliegenden Seiten (21, 22),
    - einen Verfahrensschritt des Auftragens einer keramischen oder metallischen Zusammensetzung (3a) auf mindestens eine der Seiten (21, 22) der Unterlage (2), um eine nicht gesinterte Schicht (3) zu bilden, wobei die keramische oder metallische Zusammensetzung (3a) ein keramisches oder metallisches Pulver und mindestens ein Element umfasst, das Laserstrahlen bei einer Wellenlänge von ungefähr 1μm absorbiert und mindestens 1% des Gewichts des Pulvers ausmacht,
    - ein Verfahrensschritt des Sinterns durch Laserstrahlen mit einer Wellenlänge von ungefähr 1μm, die zumindest teilweise die unterbrochene Schicht (3) bestrahlen, wobei das Verfahren **dadurch gekennzeichnet, dass**:
    - die keramische oder metallische Zusammensetzung (3a) eine wässrige Dispersion ist und
    - mindestens einer der Verfahrensschritte des Auftragens der wässrigen Zusammensetzung (3a) und des Sinterns der nicht gesinterten Schicht (3) so ausgeführt ist, dass eine unterbrochene keramische oder metallische Beschichtung gebildet ist.

13. Verfahren nach Anspruch 12, **dadurch gekennzeichnet, dass** das keramische oder metallische Pulver in der keramischen oder metallischen Zusammensetzung in 45 bis 75 Gewichtsprozent des Gesamtgewichts der Zusammensetzung (3a) vorliegt.

14. Verfahren nach Anspruch 12 oder 13, **dadurch ge-**

**kennzeichnet, dass** die keramische oder metallische Zusammensetzung (3a) so aufgetragen wird, dass eine durchgängige, nicht gesinterte Schicht (3) gebildet ist, und der Verfahrensschritt des Sinterns durch eine Laserbestrahlung erfolgt, die die nicht gesinterte Schicht (3) unterbrochen mit Strahlung überzieht.

15. Verfahren nach Anspruch 12 oder 13, **dadurch gekennzeichnet, dass** die keramische oder metallische Zusammensetzung (3a) so aufgebracht ist, dass sie eine unterbrochene, nicht gesinterte Schicht (3) bildet, und der Verfahrensschritt des Sinterns durch eine Laserbestrahlung ausgeführt wird, die die nicht gesinterte Schicht (3) unterbrochen und/ oder durchgehend mit Strahlung überzieht.

16. Verfahren nach einem der Ansprüche 12 bis 15, **dadurch gekennzeichnet, dass** als keramische oder metallische Zusammensetzung (3a) ein wässriger Emaillefritteschlicker ist.

17. Verfahren nach einem der Ansprüche 12 bis 16, **dadurch gekennzeichnet, dass** als keramische oder metallische Mischung (3a) eine wässrige Aluminiumoxid- oder und/oder Titandioxidsuspension verwendet wird.

18. Verfahren nach einem der Ansprüche 12 bis 17, **dadurch gekennzeichnet, dass** als keramische oder metallische Zusammensetzung (3a) eine wässrige Suspension rostfreien Stahlpuders verwendet wird.

19. Verfahren nach einem der Ansprüche 12 bis 18, **dadurch gekennzeichnet, dass** die keramische oder metallische Zusammensetzung (3a) auf einer der Seiten (21) der Unterlage (2) durch pneumatische Druckzerstäubung aufgebracht wird und dass die Menge der abgelagerten keramischen oder metallischen Zusammensetzung (3a) zwischen 0,1 g/dm$^2$ und 3 g/dm$^2$ beträgt.

20. Verfahren nach Anspruch 19, **dadurch gekennzeichnet, dass** der Verfahrensschritt des Sinterns der Antihaftbeschichtung (4) entweder

   • thermisch durch Backen in einem Ofen bei einer Temperatur zwischen 370°C und 430°C,
   • oder mittels eines $CO_2$-Lasers, dessen Wellenlänge 10,6 μm beträgt,

   ausgeführt wird.

Figure 1

Figure 2

Figure 3

**RÉFÉRENCES CITÉES DANS LA DESCRIPTION**

**Documents brevets cités dans la description**

- US 3663793 A
- JP 2279574 A
- FR 2575422
- FR 2575472
- WO 9916625 A